# EUROPÄISCHE PATENTSCHRIFT

(11) **EP 1 380 494 B1**
(45) Veröffentlichungstag und Bekanntmachung des Hinweises auf die Patenterteilung: **17.08.2005**
(21) Anmeldenummer: 03008396.8
(22) Anmeldetag: 11.04.2003
(51) Int. Cl.: B62D 25/14

(54) **Fahrzeugaufbau mit einem Cockpitquerträger**
Vehicle structure with dashboard cross beam
Structure de véhicule comportant une traverse de renfort de tableau de bord

(30) Priorität: 13.07.2002 DE 10231717
(43) Veröffentlichungstag der Anmeldung: 14.01.2004
(73) Patentinhaber: Dr.Ing. h.c.F. Porsche Aktiengesellschaft, 70435 Stuttgart (DE)
(72) Erfinder: Tilsner, Michael, 75446 Wiernsheim (DE); Wagner, Michael, 75417 Mühlacker (DE)

(56) Entgegenhaltungen:
- EP-A- 0 479 630
- DE-A- 10 040 824
- US-A- 4 362 319

## Beschreibung

Die Erfindung bezieht sich auf einen Fahrzeugaufbau mit einem Cockpitquerträger nach dem Oberbegriff des Anspruchs 1.

Aus der EP 0 479 630 A1 ist eine Strebe bekannt, die zwischen einem Windlaufquerträger und einem Cockpitquerträger im Bereich einer Halterung für eine Lenksäule eines Kraftfahrzeugs angeordnet ist.

Die Aufgabe der Erfindung besteht darin, eine Strebe zwischen einem Windlaufquerträger und einem Cockpitquerträger zu schaffen, die eine steife Anbindung einer Lenksäule gewährleistet und eine Lenkradzittern verhindert.

Diese Aufgabe wird erfindungsgemäß bei einem Fahrzeugaufbau mit den Merkmalen des Patentanspruchs 1 gelöst. Weitere vorteilhafte Merkmale beinhalten die Unteransprüche.

Die mit der Erfindung hauptsächlich erzielten Vorteile bestehen darin, daß durch die Anbindung der Strebe in einem Knotenpunkt des Windlaufquerträgers eine solche steife Abstützung der Lenksäule erzielt wird, daß ein Lenkradzittern unterbunden wird. Hierzu ist die Strebe an einem im Inneren des Windlaufquerträgers angeordnetem Knotenelement über einen außenseitig an dem Windlaufquerträger angeordneten Halter abgestützt. Das Knotenelement füllt den Innenraumquerschnitt des Windlaufquerträgers paßgenau aus. Durch das Vorsehen des im Windlaufquerträgers paßgenauen Knotenelements, welches den Querschnitt des Windlaufquerträgers vollkommen ausfüllt, das heißt, an allen Innenflächen satt anliegt und kein Spiel mehr aufweist, ist eine direkte Kraftanleitung in den Windlaufquerträger möglich. Insbesondere besteht das Knotenelement aus einem in einer untenliegenden Schale des Windlaufquerträgers angeordneten Profilelements und einem auf diesem in einer obenliegenden Schale des Windlaufquerträgers angeordnetem Struktur-Schaumteil. Dieses Struktur-Schaumteil gewährleistet durch ein sogenanntes Aufquellen nach einer Wärmebeeinflussung, daß ein den Querschnitt ausfüllendes Knotenelement entsteht.

Dieses Struktur-Schaumteil ist unmittelbar auf dem Profilelement angeordnet und in einem Einbauzustand mit einem Spaltemaß zur obenliegenden Schale des Windlaufquerträgers angeordnet. In einem Abstützzustand füllt das wärmeausgedehnte Struktur-Schaumteil die Schale des Windlaufquerträgers spaltfrei aus.

Zur Befestigung der Strebe am Windlaufquerträger ist ein Halter vorgesehen, der mit der untenliegenden Schale des Windlaufquerträgers fest verbunden ist und an diesem Halter ist ein Lagerelement befestigt, welches über eine Befestigungsschraube an der Strebe in einer Gewindemutter festgehalten wird. Das dem Halter abgekehrte Ende der Strebe ist am Cockpitquerträger beispielsweise durch eine Schweißung verbunden.

Das Lagerelement weist eine unmittelbar mit dem Halter verbundene Hülse sowie ein axial anschließendes Ausgleichselement auf. Die Hülse sowie das Ausgleichselement sind über die durchragende und am Halter in der Gewindemutter befestigten Schraube miteinander verbindbar. Durch das Ausgleichselement können mögliche Spaltmaße bzw. Toleranzen zwischen der Strebe und der ortsfesten Hülse am Halter ausgeglichen werden.

Erfindungsgemäß kann das Ausgleichselement mit der Strebe vormontierbar verbunden sein und an der dem Ausgleichselement abgekehrten Seite des Halters ist dann die Gewindemutter befestigt. Hierdurch wird die Montage der Strebe vereinfacht, indem das Ausgleichselement entweder fest mit der Strebe verbunden ist oder durch eine Klipsverbindung an der Strebe gehalten wird.

Durch die Befestigung des einen Endes der Strebe über dem Halter am Knotenelement des Windlaufquerträgers wird eine starre Anbindung an diesen Träger geschaffen und somit eine stabile Abstützung der am Cockpitquerträger gehaltenen Lenksäule erzielt, wodurch ein sogenanntes Lenkradzittern durch Auftreten von Schwingungen am Fahrzeug vermieden bzw. unterbunden werden.

Ein Ausführungsbeispiel der Erfindung ist in den Zeichnungen dargestellt und wird im folgenden näher beschrieben.

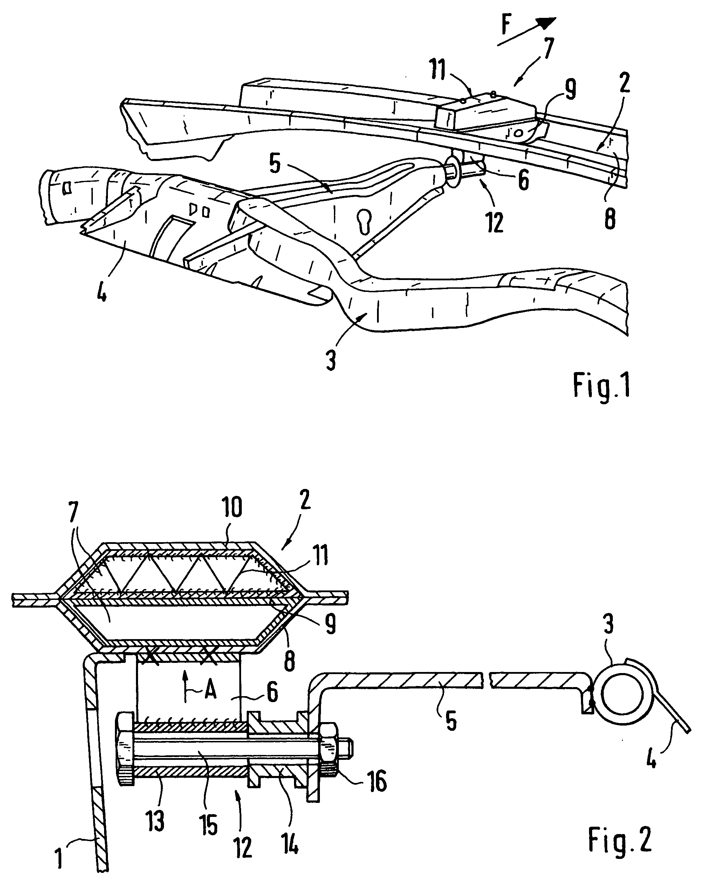

Es zeigen
- Fig. 1: eine schaubildliche Darstellung einer am Windlaufquerträger und am Cockpitquerträger befestigten Strebe mit Lagerelement und Knotenelement und
- Fig. 2: einen Querschnitt durch den Windlaufquerträger mit Cockpitquerträger und Lagerelement, Knotenelement und Strebe.

Im Fahrzeugaufbau 1 eines Kraftfahrzeugs ist - in Fahrtrichtung F gesehen - vorderseitig ein Windlaufquerträger 2 und ein Cockpitquerträger 3 angeordnet, die mit ihren freien Enden am Fahrzeugaufbau befestigbar sind, was nicht näher dargestellt ist. Am Cockpitquerträger 3 ist eine Konsole 4 zur Aufnahme einer Lenksäule vorgesehen. Zwischen dem Cockpitquerträger 3 und dem Windlaufquerträger 2 ist eine Strebe 5 angeordnet, die einerseits am Cockpitquerträger 3 befestigt ist und andererseits über einen Halter 6 an einem Knotenelement 7 mit dem Windlaufquerträger 2 verbindbar ist.

Das Knotenelement 7 setzt sich im wesentlichen aus einem in einer untenliegenden Schale 8 des Windlaufquerträgers 2 befestigten Profilelement 9 und einem über diesem in einer obenliegenden Schale 10 des Windlaufquerträgers 2 angeordneten Struktur-Schaumteil 11 zusammen.

Die Strebe 5 ist über den mit der Schale 8 verbundenen Halter 6 unmittelbar unterhalb des Knotenelements 7 mittels eines Lagerelements 12 befestigt. Dieses setzt sich aus einer mit dem Halter 6 fest verbundenen, beispielsweise durch eine Schweißung verbundene Hülse 13 und einem axial anschließenden Abstandselement 14 zusammen. Eine Verbindung der Strebe 5 mit dem Halter 6 erfolgt über eine durchragende Befestigungsschraube 15, welche in einer Gewindemutter 16 gehalten wird. Das Abstandselement 14 kann über eine Verklipsung mit der Strebe 5 verbunden werden.

Das Profilelement 9 des Knotenelements 7 wird mit der unteren Schale 8 des Windlaufquerträgers 2 fest verbunden. Auf diesem Profilelement 9 wird das Struktur-Schaumteil 11 aufgesetzt und danach wird die obere Schale 10 des Windlaufquerträgers 2 auf die untere Schale 8 aufgelegt und beide Schalen 8 und 10 werden danach fest miteinander verbunden. In einer wärmeerzeugenden Einrichtung, einem sogenannten Trocknungsofen wird das Struktur-Schaumteil 11 einer Temperaturbehandlung unterzogen, während der sich der Schaumanteil des Struktur-Schaumteils 11 ausdehnt und paßgenau an die Innenflächen der Schale 10 anlegt. Zu diesem Zweck ist zwischen dem Struktur-Schaumteil 11 und der Innenwand der Schale 10 ein kleiner Spalt von etwa 2 mm vorgesehen.

Durch die Abstützung der Strebe 5 unmittelbar über den Halter 6 am Knotenelement 7 im Windlaufquerträger 2 wird eine solche starre Anbindung der Strebe 5 erzielt, daß mögliche Schwingungen am Lenkrad der Lenksäule unterdrückt werden und ein sogenanntes Lenkradzittern verhindert wird.

## Patentansprüche

1. Fahrzeugaufbau (1) mit einem Cockpitquerträger (3) für ein Kraftfahrzeug, der eine Aufnahmekonsole (4) für eine Lenksäule umfaßt und einer mit dem Cockpitquerträger (3) und einem beabstandeten Windlaufquerträger (2) des Kraftfahrzeugs verbundenen Strebe (5), **dadurch gekennzeichnet, daß** die Strebe (5) an einem im Inneren des Windlaufquerträgers (2) angeordneten Knotenelement (7) über einen außenseitig an dem Windlaufquerträger angeordneten Halter (6) abgestützt ist und das Knotenelement (7) den Innenraumquerschnitt des Windlaufquerträgers (2) im Abstützbereich (A) der Strebe (5) paßgenau ausfüllt.

2. Fahrzeugaufbau nach Anspruch 1, **dadurch gekennzeichnet, daß** das Knotenelement (7) aus einem in einer untenliegenden Schale (8) des Windlaufquerträgers (2) angeordneten Profilelement (9) und einem auf diesem in einer obenliegenden Schale (10) des Windlaufquerträgers (2) angeordneten Struktur-Schaumteil (11) besteht.

3. Fahrzeugaufbau nach den Ansprüchen 1 und 2, **dadurch gekennzeichnet, daß** das Struktur-Schaumteil (11) unmittelbar auf dem Profilelement (9) und in einem Einbauzustand mit einem Spaltmaß zur obenliegenden Schale (10) des Windlaufquerträgers (2) angeordnet ist und in einem Abstützzustand der Strebe (5) wärmeausgedehnt innerhalb der Schale (10) diese spaltfrei ausfüllend angeordnet ist.

4. Fahrzeugaufbau nach den Ansprüchen 1, 2 oder 3, **dadurch gekennzeichnet, daß** der Halter (6) mit einer untenliegenden Schale (8) des Windlaufquerträgers (2) fest verbunden ist und an diesem Halter (6) ein Lagerelement (12) befestigt ist, welches über eine Befestigungsschraube (15) an der Strebe (5) gehalten wird.

5. Fahrzeugaufbau nach Anspruch 4, **dadurch gekennzeichnet, daß** das Lagerelement (15) eine unmittelbar mit dem Halter (6) verbundene Hülse (13) sowie ein axial anschließendes Ausgleichselement (14) umfaßt und die Hülse (13) sowie das Ausgleichselement (14) über die durchragende und am Halter (6) in einer Gewindemutter (16) befestigte Schraube (15) miteinander verbindbar sind.

6. Fahrzeugaufbau nach Anspruch 5, **dadurch gekennzeichnet, daß** das Ausgleichselement (14) mit der Strebe (5) vormontierbar verbunden ist und an der dem Ausgleichselement (14) abgekehrten Seite am Halter (6) die Gewindemutter (6) befestigt ist.

## Claims

1. A vehicle body (1) with a dashboard cross member (3) for a motor vehicle, comprising a receiving bracket (4) for a steering column, and a brace (5) connected to the dashboard cross member (3) and a spaced cowl cross member (2) of the motor vehicle, **characterized in that** the brace (5) is supported, by way of a holding means (6) arranged on the cowl cross member on the outside, on a junction element (7) arranged in the interior of the cowl cross member (2), and the junction element (7) fills the cross-section of the interior space of the cowl cross member (2) in the supporting region (A) of the brace (5) in a precisely fitting manner.

2. A vehicle body according to Claim 1, **characterized in that** the junction element (7) comprises a profiled element (9), arranged in a lower shell (8) of the cowl cross member (2), and a foamed structural part (11), arranged on the said profiled element (9) in an upper shell (10) of the cowl cross member (2).

3. A vehicle body according to Claims 1 and 2, **characterized in that** the foamed structural part (11) is arranged directly on the profiled element (9) and in a fitted state with a clearance with respect to the upper shell (10) of the cowl cross member (2), and in a supporting state of the brace (5) is arranged thermally expanded inside the shell (10) so as to fill the latter in a manner without gaps.

4. A vehicle body according to Claims 1, 2 or 3, **characterized in that** the holding means (6) is connected in a fixed manner to a lower shell (8) of the cowl cross member (2), and a mounting element (12), which is held on the brace (5) by way of a fastening bolt (15), is fastened to the said holding means (6).

5. A vehicle body according to Claim 4, **characterized in that** the mounting element (15) [*sic* - *recte* (12)] comprises a sleeve (13), connected directly to the holding means (6), and an axially adjoining compensation element (14), and the sleeve (13) and the compensation element (14) can be connected to each other by way of the bolt (15) projecting through and fastened to the holding means (6) in a threaded nut (16).

6. A vehicle body according to Claim 5, **characterized in that** the compensation element (14) is connected to the brace (5) in a manner capable of being assembled beforehand, and the threaded nut (6) [*sic* - *recte* (16)] is fastened to the holding means (6) on the side facing away from the compensation element (14).

## Revendications

1. Structure de véhicule (1) comportant une traverse de renfort de tableau de bord (3) pour un véhicule moteur, qui comprend une console de logement (4) pour une colonne de direction, et une barre (5) reliée à la traverse de renfort de tableau de bord (3) et une traverse de renfort d'auvent (2), placée à distance, du véhicule moteur, **caractérisée en ce que** la barre (5) est étayée sur un élément de jonction (7), disposé à l'intérieur de la traverse de renfort d'auvent (2), par le biais d'un support (6) disposé côté externe sur la traverse de renfort d'auvent et l'élément de jonction (7) remplit parfaitement la section transversale de l'espace interne de la traverse de renfort d'auvent (2) dans la zone d'appui (A) de la barre (5).

2. Structure de véhicule selon la revendication 1, **caractérisée en ce que** l'élément de jonction (7) est composé d'un élément profilé (9) disposé dans une coque inférieure (8) de la traverse de renfort d'auvent (2) et d'une pièce en mousse structurée (11) disposée sur cet élément profilé dans une coque supérieure (10) de la traverse de renfort d'auvent (2).

3. Structure de véhicule selon les revendications 1 et 2, **caractérisée en ce que** la pièce en mousse structurée (11) est disposée directement sur l'élément profilé (9) et, dans un état d'encastrement, avec un espace par rapport à la coque supérieure (10) de la traverse de renfort d'auvent (2) et est disposée, dans un état d'étaiement de la barre (5), thermiquement dilatée à l'intérieur de la coque (10), remplissant cette dernière sans laisser d'espace.

4. Structure de véhicule selon les revendications 1, 2 ou 3, **caractérisée en ce que** le support (6) est solidement relié à une coque inférieure (8) de la traverse de renfort d'auvent (2) et **en ce qu'**un élément de palier (12) est fixé à ce support (6), lequel élément est maintenu sur la barre (5) par le biais d'une vis de fixation (15).

5. Structure de véhicule selon la revendication 4, **caractérisée en ce que** l'élément de palier (15) comprend une douille (13) directement reliée au support (6) ainsi qu'un élément de compensation (14) contigu dans le sens axial et **en ce que** la douille (13) ainsi que l'élément de compensation (14) peuvent être reliés l'un à l'autre par le biais de la vis (15) traversante et fixée au support (6) dans un écrou fileté (16).

6. Structure de véhicule selon la revendication 5, **caractérisée en ce que** l'élément de compensation (14) est relié à la barre (5) de manière prémontable et l'écrou fileté (6) est fixé sur le support (6) sur le côté ne faisant pas face à l'élément de compensation (14).
